# EUROPÄISCHE PATENTANMELDUNG

(11) **EP 0 826 637 A2**
(43) Veröffentlichungstag der Anmeldung: **04.03.1998**
(21) Anmeldenummer: 97108291.2
(22) Anmeldetag: 22.05.1997
(51) Int. Cl.: C02F 3/06, A01K 63/04

(54) **Wasseraufbereitungsanlage für Wasser aus Aquarien, Wasserbassins, Fischteichen, Schwimmbecken oder dergleichen**

(30) Priorität: 29.08.1996 DE 19634790
(71) Anmelder: Kruk, Wolfgang, D-37235 Hessisch Lichtenau (DE)
(72) Erfinder: Kruk, Wolfgang, D-37235 Hessisch Lichtenau (DE)
(74) Vertreter: WALTHER, WALTHER & HINZ Patentanwälte

(57) **Zusammenfassung**

Gegenstand der Erfindung ist eine Wasseraufbereitungsanlage für Wasser aus Aquarien, Wasserbassins, Fischteichen, Schwimmbecken oder dergleichen mit einem einen Zulauf (24) und einen Ablauf (28) aufweisenden Wasserbehälter (2), in dem Reinigungshilfsmittel (12, 14, 16) untergebracht sind, wobei an den Reinigungshilfsmitteln (12, 14, 16) Bakterienkulturen angelagert sind.

Eine Wasseraufbereitungsanlage zu schaffen, die nicht stark verschmutzt, so daß die Reinigungsintervalle vergrößert werden können, um gleichzeitig die Ausfallzeiten und die Reinigungskosten zu minimieren, wird dadurch ereicht, daß der Wasserbehälter (2) eine die Reinigungshilfsmittel (12, 14, 160) aufnehmende Reinigungskammer (4, 6, 8) und eine unterhalb der Reinigungskammer (4, 6, 8) angeordnete, sich nach unten konisch verjüngend zulaufende Sammelkammer (18) aufweist, und daß der Zulauf (24) in die Sammelkammer (18) mündet, während der Ablauf (28) in einem oberen Bereich der Reinigungskammer (4, 6, 8) angeordnet ist, so daß die Reinigungskammer (4, 6, 8) von unten nach oben durchströmt wird.

## Beschreibung

Die vorliegende Erfindung betrifft Wasserbehälter für eine Filterbeziehungsweise Wasseraufbereitungsanlage zum Filtern oder Aufbereiten von Wasser aus Aquarien, Wasserbassins, Fischteichen, Schwimmbecken oder dergleichen, mit einer Reinigungskammer zur Aufnahme von Reinigungshilfsmitteln, mit einer unterhalb der Reinigungskammer angeordneten sich nach unten konisch verjüngend zulaufenden Sammelkammer, mit einem in die Sammelkammer mündenden Zulauf und mit einem in einem oberen Bereich der Reinigungskammer angeordneten Ablauf, so daß die Reinigungskammer von unten nach oben durchströmt wird. Des Weiteren betrifft die vorliegende Erfindung Wasseraufbereitungsanlagen zum Aufbereiten von Wasser, bei denen die zuvor beschriebenen Wasserbehälter eingesetzt werden.

Aus der DE-G 73 20 745 ist eine Vorrichtung zum Filtern verschmutzter Flüssigkeiten bekannt, bei der in drei hintereinander geschalteten Kammern verschiedene Filterplatten beziehungsweise Filtermaterialien angeordnet sind, wobei die einzelnen Kammern durch Schottwänder voneinander abgetrennt sind. Die einzelnen Kammern sind durch weitere Schottwänder derart voneinander beabstandet, daß zwischen den einzelnen Kammern und vor der ersten und hinter letzten Kammer jeweils Schächte entstehen, durch die das Wasser fließen kann. Darüber hinaus ist in der ersten und der zweiten Kammer unterhalb des Filtermaterials eine zusätzliche Absetzkammer vorgesehen, in der das strömende Wasser beruhigt wird.

Bei der Filteranlage gemäß der DE-G 73 20 745 gelangt das zu filternde Wasser durch den ersten Schacht in die erste Absetzkammer. Aufgrund der Querschnittsvergrößerung beruhigt sich das Wasser hier und im Wasser befindliche Schwebeteilchen können sich absetzen. Durch das nachfließende Wasser wird das zu filternde Wasser nun durch das Filtermaterial der ersten Kammer hindurchgedrückt, bevor es durch den zweiten Schacht in die Absetzkammer der zweiten Kammer fließt. Hier setzen sich weitere Schwebeteilchen ab, bevor das Wasser durch den Filter der zweiten Kammer nach demselben Prinzip in die dritte Kammer gelangt und einer abschließenden Filterung unterzogen wird.

Mit der Zeit sammeln sich immer mehr Schwebe- und Schmutzteilchen in den Absetzkammern an mit der Folge, daß ein gewisser Prozentsatz dieser Schmutz- und Schwebeteilchen beim Aufsteigen des Wassers in das Filtermaterial mitgerissen wird. Im Ergebnis bedeutet dies, daß die Filterleistung dieser Filteranlage mit zunehmender Verschmutzung der Absetzkammers immer schlechter wird.

Abhilfe kann dadurch geschaffen werden, daß die Filteranlage gereinigt wird. Hierzu muß die Wasserzufuhr unterbrochen werden und die Filtermatten müssen herausgenommen werden, bevor man die Schmutzpartikel aus den Absetzkammern herausholen kann. Bei dieser Gelegenheit werden die Filtermatten ebenfalls gereinigt. Nach dem Einsetzen der gereinigten Filtermatten wird die Filteranlage dann wieder in Betrieb genommen.

Aus der DE 709 296 ist eine Filteranlage bekannt, bei der das zu filternde Wasser in den Fußbereich einer Vorfilterkammer mit einem trichterförmigen Boden geleitet wird. Auch hier setzen sich aufgrund der Beruhigung des Wassers die schweren Schwebe- und Schmutzpartikel ab, bevor das Wasser nach oben gedrückt und in eine benachbarte, mit einem Filtermaterial versehene Filterkammer geleitet wird. Die sich auf dem trichterförmigen Boden der Vorfilterkammer absetzenden Schwebe- und Schmutzpartikel können über einen am Ende des Trichters angesiedelten Wasserhahn herausgespült werden.

Auch bei dieser Filteranlage ist es zur Reinigung des Filtermaterials in der zweiten und dritten Kammer notwendig, die Wasserzufuhr zu unterbrechen und die Filteranlage für eine bestimmte Zeit auszuschalten. Durch Herausnehmen der jeweiligen Filtermatten und Einsetzen neuer beziehungsweise gereinigter Filtermatten wird wieder eine ordnungsgemäße Reinigung des Wassers erreicht.

Sowohl bei der Filteranlage aus der DE-G 73 20 746, als auch bei der Filteranlage gemäß der DE 709 296 werden Schwebe- und Schmutzpartikel aus dem Wasser ausgefiltert, eine biologische Aufbereitung und Erneuerung des Wasser kann hierdurch jedoch nicht erreicht werden.

Zur biologischen Aufbereitung und Erneuerung des Wassers sind Wasseraufbereitungsanlagen bekannt, die ebenfalls drei Kammern aufweisen. Dabei ist die erste Kammer zur Grobreinigung des Wassers mit mehreren Bürsten versehen, während die zweite Kammer mit Fliesmatten und die dritte Kammer zur Endreinigung mit Kieselsteinen gefüllt ist. Diesen drei Kammern ist ein Zyklon vorgeschaltet, in dem die groben, im Wasser befindlichen Schmutzpartikel ausgeschieden werden. Das durch den Zyklon vorgereinigte Wasser wird dann der Reihe nach in die erste, die zweite und die dritte Kammer geleitet. In den einzelnen Kammern bilden sich Bakterienkulturen, die an den Bürsten, den Fliesmatten oder den Kieselsteinen anhaften. Diese Bakterien bearbeiten verschiedene andere im Wasser befindliche Schadstoffe, so daß am Ende ein im höchsten Grad gereinigtes und aufbereitetes Wasser die Wasseraufbereitungsanlage verläßt.

Problematisch ist bei dieser Wasseraufbereitungsanlage, daß die aus dem Wasser ausgefilterten Schmutz- und Schwebepartikel die gesamte Anlage verstopfen, so daß diese in regelmäßigen Abständen gereinigt werden muß. Ähnlich wie bei den oben erwähnten Filteranlagen, ist es zur Reinigung der Wasseraufbereitungsanlage notwendig, diese abzuschalten und die Bürsten, die Fliesmatten und die Kieselsteine herauszunehmen und zu reinigen. Bei der Wasseraufbereitungsanlage ist jedoch besonders nachteilig, daß durch die Reinigung sämtliche Bakterienkulturen zerstört werden. Nach der Wiederinbetriebnahme der Wasseraufbereitungsanlage dauert es nun eine geraume Zeit, bis sich die Bakterienkulturen wieder in ausreichender Größe gebildet haben, so daß während dieser Zeit nur eine unzureichende Wasseraufbereitung stattfinden kann.

Davon ausgehend liegt der vorliegenden Erfindung die Aufgabe zugrunde, eine Wasseraufbereitungsanlage und dazugehörige Wasserbehälter zu schaffen, die nicht stark verschmutzen, so daß die Reinigungsintervalle vergrößert werden können, um gleichzeitig die Ausfallzeiten und die Reinigungskosten zu minimieren.

Als technische Lösung dieser Aufgabe wird erfindungsgemäß vorgeschlagen, die Wasseraufbereitungsanlage der eingangs genannten Art dahingehend weiterzubilden, daß der Wasserbehälter eine die Reinigungshilfsmittel aufnehmende Reinigungskammer und eine unterhalb der Reinigungskammer angeordnete, sich nach unten konisch verjüngend zulaufende Sammelkammer aufweist, und daß der Zulauf in die Sammelkammer mündet, während der Ablauf in einem oberen Bereich der Reinigungskammer angeordnet ist, so daß die Reinigungskammer von unten nach oben durchströmt wird.

Eine nach dieser technischen Lehre ausgebildete Wasseraufbereitungsanlage hat den Vorteil, daß der vorgeschaltete Zyklon überflüssig wird, da das in die Sammelkammer einfließende Wasser in dieser so stark verlangsamt wird, daß sich die schweren Schmutzpartikel dort absetzen können. Das derartig von Schmutzpartikeln gereinigte Wasser kann dann nach oben steigen, um dort mittels der Reinigungshilfsmittel weiter gereinigt zu werden.

Ein weiterer Vorteil besteht darin, daß die trichterförmig ausgebildete Sammelkammer die Schmutzpartikel an ihrer tiefsten Stelle lagert, so daß diese relativ weit von den Reinigungshilfsmitteln entfernt sind. Hierdurch wird vermieden, daß bereits abgelagerte Schmutzpartikel durch die Strömung mitgerissen werden und in die Reinigungshilfsmittel gelangen.

Ein weiterer Vorteil dieser Sammelkammer besteht darin, daß ein Entfernen der Schmutzpartikel in einfacher Weise möglich wird, insbesondere wenn an der tiefsten Stelle ein Ablaufventil vorgesehen ist. Dieses Ablaufventil kann beispielsweise ein handelsüblicher Wasserhahn sein. Durch Öffnen dieses Wasserhahns für einen kurzen Moment wird eine kleine Menge Wasser aus der jeweiligen Kammer herausgedrückt, die die in der Sammelkammer befindlichen Schmutzpartikel mit sich führt. Somit ist eine einfache und problemlose Reinigung der Wasseraufbereitungsanlage möglich, ohne daß die gesamte Anlage stillgelegt werden muß.

Hierdurch ist eine Wasseraufbereitungsanlage geschaffen, die kontinuierlich betrieben werden kann und bei der eine Verschmutzung beziehungsweise Verstopfung der Reinigungshilfsmittel erst nach sehr langer Zeit eintritt, da die groben Schmutz- und Schwebepartikel bereits in den Sammelkammern ausgeschieden und abtransportiert werden.

Ein weitere Vorteil besteht darin, daß durch das häufige Entfernen der Schmutzpartikel die Gefahr der Pilzbildung minimiert wird.

Noch ein weiterer Vorteil besteht darin, daß die Wasseraufbereitungsanlage mit den zyklonenähnlich ausgebildeten Sammelkammern kostengünstig herstellbar und kostengünstig am Einsatzort montierbar ist, insbesondere, da der externe Zyklon entfällt.

Ein weiterer, wesentlicher Vorteil der erfindungsgemäßen Wasseraufbereitungsanlage besteht darin, daß die Reinigungshilfsmittel, insbesondere die Kieselsteine, die Fliesmatten oder die Bürsten nur noch sehr selten gereinigt werden brauchen, so daß die bestehenden Bakterienkulturen nur noch sehr selten zerstört werden.

Als weitere technische Lösung der erfindungsgemäßen Aufgabe wird vorgeschlagen, den eingangs genannten Wasserbehälter dahingehend weiterzubilden, daß der Zulauf derart an der Sammelkammer angebracht ist und mit dieser zusammenwirkt, so daß das in die Sammelkammer einströmende Wasser einen Drall erfährt und in der Sammelkammer eine kreisende Bewegung ausführt.

Ein nach dieser technischen Lehre ausgebildeter Wasserbehälter hat den Vorteil, daß die sich in dem kreiselnden Wasser befindlichen Schwebe- und Schmutzpartikel aufgrund ihrer Trägheit ins Innere der Sammelkammer bewegen, sobald die Fließgeschwindigkeit des Wassers abnimmt. Gleichzeitig fallen die im Zentrum des Sammelbehälters befindlichen Schwebe- und Schmutzpartikel in den Trichter, während das derart gereinigte Wasser nach oben in die Reinigungshilfsmittel gedrückt wird. Gleichzeitig wird das Wasser aufgrund der Querschnittserweiterung beruhigt, so daß dieser Effekt noch verstärkt wird.

Es hat sich gezeigt, daß durch die kreisende Bewegung des Wassers sehr viel mehr Schwebe- und Schmutzpartikel ausgesondert werden können, so daß das die Reinigungshilfsmittel erreichende Wasser bereits einen hohen Reinheitsgrad aufweist. Hierdurch werden etwaige Filtermaterialien geschont, so daß die Reinigungsintervalle für die Wasserfilter- oder Wasseraufbereitungsanlage deutlich erhöht werden können.

In einer bevorzugten Ausführungsform ist die Sammelkammer kegelförmig ausgebildet, was die vorgenannten Effekte noch unterstützt. Durch die im Querschnitt kreisrunde Ausgestaltung der Sammelkammer wird die kreiselnde Bewegung des Wassers unterstützt, so daß die oben beschriebenen Effekte sehr viel eher eintreten.

In einer weiteren, bevorzugten Weiterbildung des erfindungsgemäßen Wasserbehälters ist der Zulauf derart angeordnet, daß das Wasser zunächst parallel zu einer Seitenwand der Sammelkammer in diese eintritt, und anschließend von der kegelförmig ausgebildeten Seitenwand in eine kreiselnde Bewegung überführt wird. Hierdurch wird erreicht, daß das eintretende und zu reinigende Wasser, ohne große Strömungsverluste zu erleiden, in die kreiselnde Bewegung überführt wird, so daß die oben genannten Effekte optimal ausgenutzt werden können.

In einer anderen bevorzugten Weiterbildung ist der Zulauf derart an der Sammelkammer angebracht, daß die Drehrichtung des kreiselnden Wassers mit der Coriolisbeschleunigung der Erdbewegung konform geht. In der Praxis bedeutet dies, daß das kreiselnde Wasser auf der Nordhalbkugel eine Rechtsdrehung ausführt. Hierdurch wirkt die sogenannte Coriolisbeschleunigung unterstützend und verstärkt die kreiselnde Bewegung des Wassern, so daß die vorgenannten Effekte weiter verstärkt werden.

Weitere Vorteile der erfindungsgemäßen Wasseraufbereitungsanlage und des erfindungsgemäßen Wasserbehälters ergeben sich aus der Beschreibung der bevorzugten Ausführungsform und aus der beigefügten Zeichnung. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. In der Zeichnung sind erfindungsgemäße Ausführungsformen dargestellt, anhand deren die Erfindung näher erläutert wird. Es zeigen:

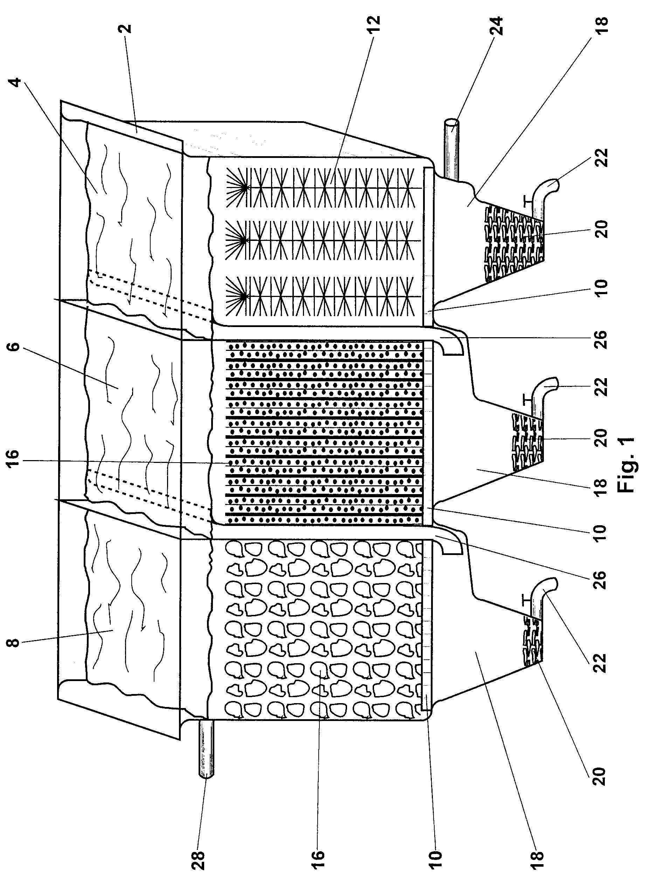

- Fig. 1: eine geschnittene Ansicht einer ersten Ausführungsform einer erfindungsgemäßen Wasseraufbereitungsanlage mit drei Kammern;
- Fig. 2: eine geschnittene Ansicht einer zweiten Ausführungsform einer erfindungsgemäßen Wasseraufbereitungsanlage mit einer Kammer;
- Fig. 3: eine Draufsicht auf einen erfindungsgemäßen Wasserbehälter;
- Fig. 4: eine Seitenansicht des Wasserbehälters gemäß Fig. 3;
- Fig. 5: eine Seitenansicht des Wasserbehälters gemäß Fig. 3, geschnitten entlang Linie V-V in Fig. 3.

Die in der Zeichnung dargestellte Wasseraufbereitungsanlage umfaßt einen Wasserbehälter 2 mit einer Vorkammer 4, einer Mittelkammer 6 und einer Endkammer 8. In der Vorkammer 4 sind auf einem Gitter 10 verschiedene Bürsten 12 vorgesehen, an denen sich Bakterien zur Reinigung des Wassers bilden, während in der Mittelkammer 6 Vliesmatten 14 und in der Endkammer 8 Kieselsteine 16 vorgesehen sind. Auch in der Mittelkammer 6 und in der Endkammer 8 entstehen Bakterienkulturen zur Aufbereitung des Wassers.

Unterhalb der Gitter 10 ist eine trichterförmige, sich konisch nach unter verjüngende Sammelkammer 18 ausgebildet, in der sich die im Wasser befindlichen Schmutzpartikel ablagern. An der tiefsten Stelle der Sammelkammer 18 ist ein Ablaufventil 22 in Form eines Wasserhahns vorgesehen, durch den die in der Sammelkammer 18 angesammelten Schmutzpartikel 20 ausgetragen werden können.

Durch einen in die Sammelkammer 18 mündenden Zulauf 24 werden etwa 50 bis 200 l Wasser je Minute in die Wasseraufbereitungsanlage gefördert. Dieses verunreinigte Wasser wird in der zyklonenartig ausgebildeten Sammelkammer 18 verlangsamt, so daß sich die vergleichsweise schweren Schmutzpartikel nach unter absetzen können. Wenn nun mehr Wasser nachströmt, wird dieses bereits von den größten Schmutzpartikeln 20 getrennte Wasser nach oben gedrückt und passiert die Bürsten 12, bevor es über einen Wasserkanal 26 in die Sammelkammer 18 der Mittelkammer 6 gelangt. Dieser Wasserkanal 26 ist so breit ausgebildet, daß er über die gesamte Breite des Wasserbehälters 2 reicht. Hierdurch kann eine große Wassermenge den Wasserkanal 26 passieren, so daß die Fließgeschwindigkeit niedrig gehalten wird.

In der Sammelkammer 18 der Mittelkammer 6 können sich weitere Schmutzpartikel 20 absetzen, bevor das Wasser dann durch die Vliesmatten 14 nach oben gedrückt wird. Anschließend wird das Wasser dann durch den Wasserkanal 26 in die Sammelkammer 18 der Endkammer 8 gedrückt, in der sich weitere Schmutzpartikel 20 absetzen. Schließlich wird das Wasser vorbei an den Kieselsteinen 16 zum Ablauf 28 gedrückt, von wo es in den Wasserkreislauf zurückgelangen kann.

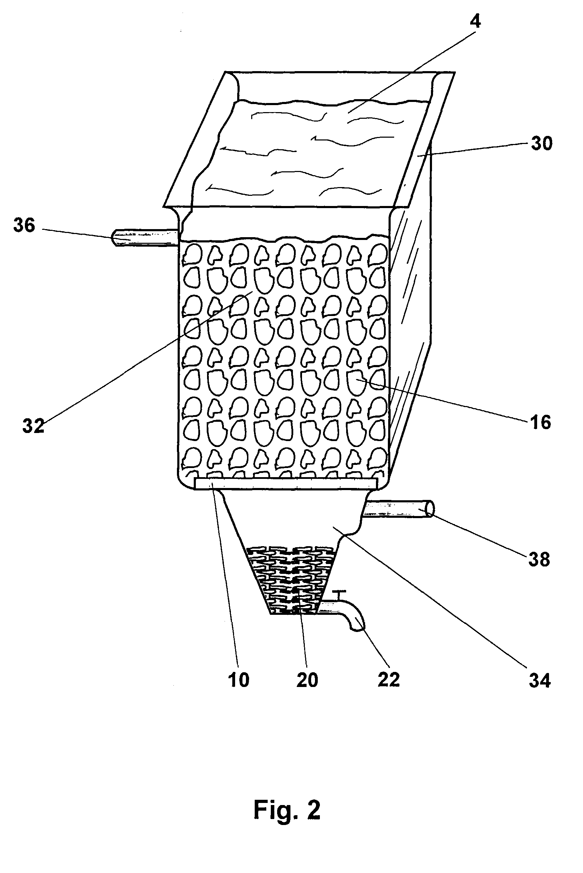

Figur 2 zeigt eine zweite Ausführungsform einer erfindungsgemäßen Wasseraufbereitungsanlage 30 mit einem einzigen Wasserbehälter. In dieser auch gerne als Quelltopf bezeichneten Wasseraufbereitungsanlage 30 sind in einer Reinigungskammer 32 Kieselsteine 16 als Reinigungshilfsmittel vorgesehen. Auch hier strömt das Wasser zunächst in eine Sammelkammer 34, wird dort verlangsamt, so daß sich die Schwebe- und Schmutzpartikel absetzen können und gelangt dann in das Kiesbett 16 zur Aufbereitung. Über den Ablauf 36 fließt das gereinigte und aufbereitete Wasser dann wieder ab.

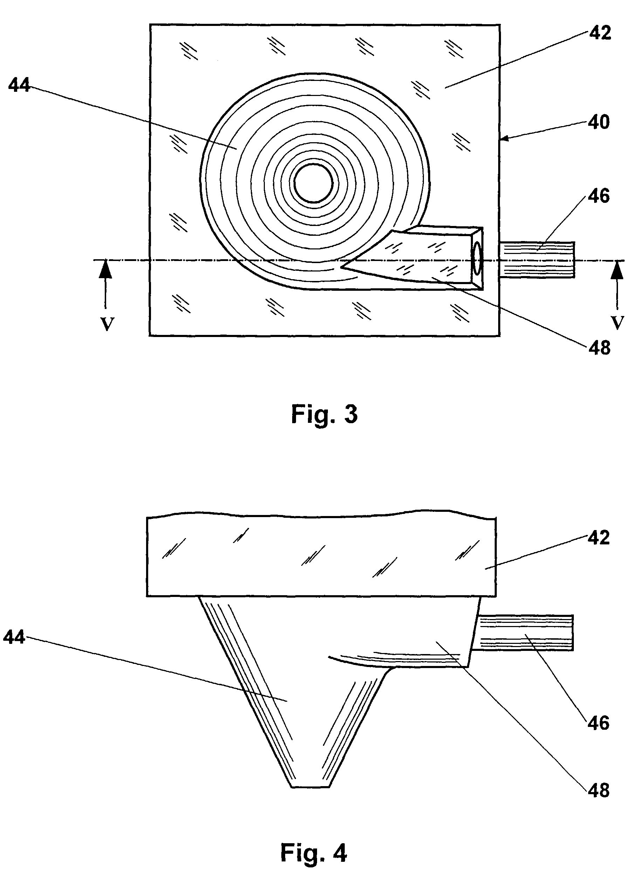

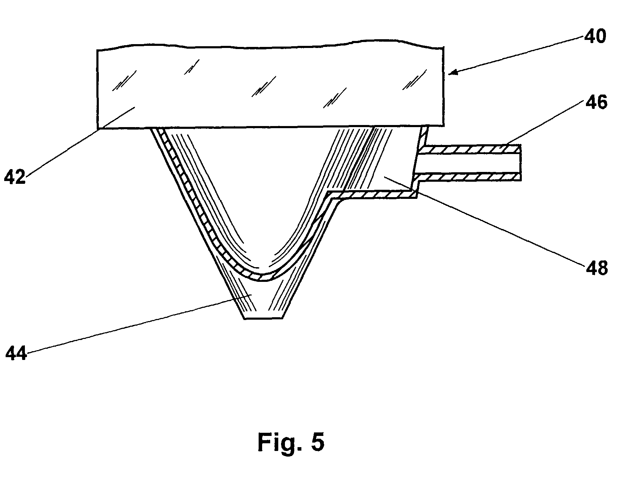

Die Wasseraufbereitungsanlagen 2, 30 sind mit einer erfindungsgemäßen Sammelkammer ausgestattet, wie sie nachfolgend anhand der Figuren 3 bis 5 näher erläutert wird. In anderen Ausführungsformen ist es aber auch möglich, die Wasseraufbereitungsanlagen 2, 30 mit kegeförmigen Sammelkammern auszustatten.

Der in den Fig. 3 bis 5 dargestellte Wasserbehälter 40 umfaßt eine Reinigungskammer 42 zur Aufnahme hier nicht dargestellter Reinigungshilfsmittel und eine Sammelkammer 44, in die ein Zulauf 46 mündet. Der Zulauf 46 ist an einem Eintrittskanal 48 vorgesehen, welcher das Wasser in die Sammelkammer 44 geleitet. Dabei geht die Außenwand der Sammelkammer 44 nahezu übergangslos in die Außenwand des Eintrittskanales über, so daß das Wasser strömungsgünstig, d. h. ohne große Strömungswiderstände, von der linearen Bewegung im Zulauf 46 bzw. im Eintrittskanal 48 in eine kreiselnde Bewegung in der Sammelkammer 44 überführt wird.

### Bezugszeichenliste:

- 2, 30, 40: Wasserbehälter
- 4: Vorkammer
- 6: Mittelkammer
- 8: Endkammer
- 10: Gitter
- 12: Bürste
- 14: Vliesmatte
- 16: Kieselsteine
- 18, 34, 44: Sammelkammer
- 20: Schmutzpartikel
- 22: Ablaufventil
- 24, 46: Zulauf
- 26: Wasserkanal
- 28, 36: Ablauf
- 32, 42: Reinigungskammer
- 48: Eintrittskanal

## Patentansprüche

1. Wasserbehälter für eine Filter- oder eine Wasseraufbereitungsanlage zum Filtern oder Aufbereiten von Wasser aus Aquarien, Wasserbassins, Fischteichen, Schwimmbecken oder dergleichen, mit einer Reinigungskammer (4, 6, 8, 32, 42) zur Aufnahme von Reinigungshilfsmitteln (12, 14, 16), mit einer unterhalb der Reinigungskammer (4, 6, 8, 32, 42) angeordneten, sich nach unten konisch verjüngend zulaufenden Sammelkammer (18, 34, 44), mit einem in die Sammelkammer (18, 34, 44) mündenden Zulauf (24, 46) und mit einem in einem oberen Bereich der Reinigungskammer (4, 6, 8, 32, 42) angeordneten Ablauf (28), so daß die Reinigungskammer (4, 6, 8, 32, 42) von unten nach oben durchströmt wird,
**dadurch gekennzeichnet**,
daß der Zulauf (24, 46) derart an der Sammelkammer (18, 34, 44) angebracht ist und mit dieser zusammenwirkt, so daß das in die Sammelkammer (18, 34, 44) einströmende Wasser einen Drall erfährt und in der Sammelkammer (18, 34, 44) eine kreisende Bewegung ausführt.

2. Wasserbehälter nach Anspruch 1,
**dadurch gekennzeichnet**,
daß die Sammelkammer (18, 34, 44) kegelförmig ausgebildet ist.

3. Wasserbehälter nach Anspruch 2,
**dadurch gekennzeichnet**,
daß der Zulauf (24, 46) derart angeordnet ist, daß das Wasser zunächst parallel zu einer Seitenwand der Sammelkammer (18, 34, 44) in diese eintritt und anschließend von der kegelförmig ausgebildeten Seitenwand (18 34, 44) in eine kreisende Bewegung überführt wird.

4. Wasserbehälter nach Anspruch 3,
**dadurch gekennzeichnet**,
daß der Zulauf (24, 46) derart an der Sammelkammer (18, 34, 44) angebracht ist, daß die Drehrichtung des kreiselnden Wasser mit der Coriolisbeschleunigung der Erdbewegung konform geht.

5. Wasserbehälter nach wenigstens einem der vorherigen Ansprüche,
**dadurch gekennzeichnet**,
daß am tiefsten Punkt der Sammelkammer (18) ein Ablaufventil (22) angebracht ist.

6. Wasseraufbereitungsanlage zum Aufbereiten von Wasser aus Aquarien, Wasserbassins, Fischteichen, Schwimmbecken oder dergleichen, mit einem einen Zulauf (24) und einen Ablauf (28) aufweisenden Wasserbehälter (2, 30), in dem Reinigungshilfsmittel (12, 14, 16) untergebracht sind, wobei an den Reinigungshilfsmitteln (12, 14, 16) Bakterienkulturen angelagert sind,
**dadurch gekennzeichnet**,
daß der Wasserbehälter (2, 30) eine die Reinigungshilfsmittel (12, 14, 16) aufnehmende Reinigungskammer (4, 6, 8, 32) und eine unterhalb der Reinigungskammer (4, 6, 8, 32) angeordnete, sich nach unten konisch verjüngend zulaufende Sammelkammer (18, 34) aufweist, und daß der Zulauf (24) in die Sammelkammer (18, 34) mündet, während der Ablauf (28) in einem oberen Bereich der Reinigungskammer (4, 6, 8, 32) angeordnet ist, so daß die Reinigungskammer (4, 6, 8, 32) von unten nach oben durchströmt wird.

7. Wasserbehälter nach Anspruch 6,
**dadurch gekennzeichnet**,
daß der Wasserbehälter (2, 30) nach wenigstens einem der Ansprüche 1 bis 4 ausgebildet ist.

8. Wasseraufbereitungsanlage nach wenigstens einem der Ansprüche 6 bis 7,
**dadurch gekennzeichnet**,
daß wenigstens drei Wasserbehälter vorgesehen sind, wobei in jedem Wasserbehälter andere Reinigungshilfsmittel (12, 14, 16) vorgesehen sind.

9. Wasseraufbereitungsanlage nach wenigstens einem der vorhergehenden Ansprüche,
**dadurch gekennzeichnet**,
daß als Reinigungshilfsmittel (12, 14, 16) ein Sieb, Kieselsteine, Holzkohle, Aktivkohle, porösgebranntes Tongranulat, Bürsten, Schaumstoff, Kunstfasern, Naturfasern oder Vliesmatten einsetzbar sind.
